# EUROPÄISCHE PATENTSCHRIFT

(11) **EP 0 616 827 B1**
(45) Veröffentlichungstag und Bekanntmachung des Hinweises auf die Patenterteilung: **05.06.1996**
(21) Anmeldenummer: 94102868.0
(22) Anmeldetag: 25.02.1994
(51) Int. Cl.: B01D 29/15, B01D 29/23, B01D 29/54, B01D 35/143, B01D 35/147

(54) **Flüssigkeitsfilter**
Liquid filter
Filtre de liquide

(30) Priorität: 26.03.1993 DE 4309858
(43) Veröffentlichungstag der Anmeldung: 28.09.1994
(73) Patentinhaber: ROBERT BOSCH GMBH, 70442 Stuttgart (DE)
(72) Erfinder: Straubel, Max, Dr. Dipl.-Ing., D-70329 Stuttgart (DE); Projahn, Ulrich, Dipl.-Ing., E-28109 El Soto (Madrid) (ES); Lucas, Bernhard, Dipl.-Ing., E-28034 Madrid (ES)

(56) Entgegenhaltungen:
- DE-A- 3 637 325
- GB-A- 1 299 771
- US-A- 3 331 509

## Beschreibung

### Stand der Technik

Die Erfindung geht aus von einem Flüssigkeitsfilter nach der im Oberbegriff des Anspruchs 1 näher angegebenen Gattung.

Es ist schon ein solches Flüssigkeitsfilter zum Reinigen von Kraftstoffen aus der US-PS 3 331 509 bekannt, das neben einem Hauptfilterelement ein zusätzliches, parallel geschaltetes Hilfsfilterelement aufweist, das am Ende der Standzeit des Hauptfilterelements von einem Differenzdruckventil automatisch zugeschaltet wird. Bei solchen Flüssigkeitsfiltern mit zwei umschaltbaren Filterelementen kann ein Fahrzeug nach der Verschmutzung des Hauptfilterelements noch einige Zeit ohne Störung betrieben werden. Auch läßt sich durch eine Registrierung des Druckanstiegs über der Laufzeit der Umschaltpunkt als ein Korrekturwert verwenden, um eine kostengünstige Standzeitüberwachung zu realisieren. Bei diesem Flüssigkeitsfilter liegen die beiden Filterelemente konzentrisch ineinander, wodurch eine große Filterfläche bei kleinem Bauraum realisierbar ist. Von Nachteil bei diesem Flüssigkeitsfilter ist nun, daß hier die beiden Filterelemente zwischen sich eine ringförmige Abflußkammer einschließen und das dem Hilfsfilterelement zugeordnete Differenzdruckventil im unteren Bodenteil des Filterelements angeordnet ist. Dabei ist das Differenzdruckventil nicht nur konzentrisch im Filtereinsatz angeordnet, sondern arbeitet auch mit einem relativ groß bauenden tellerförmigen Schließglied. Zudem ist am anderen stirnseitigen Ende des Filtereinsatzes ein Bypaßventil angeordnet, das zum Differenzdruckventil in Serie liegt und bei Verstopfung beider Filterelemente Druckmittel vom Zulauf zum Ablauf leitet. Dieses Flüssigkeitsfilter, das zwar als Gehäusefilter mit einem abnehmbaren becherförmigen Gehäuseteil ausgebildet ist, baut verhältnismäßig aufwendig. Ein Austausch eines verschmutzten Filtereinsatzes gestaltet sich äußerst zeitraubend und kostenintensiv, da das Differenzdruckventil zumindest teilweise ausgebaut werden muß. Zudem ist bei dieser Bauweise ein Abgriff eines Signals vom Differenzdruckventil äußerst schwierig durchführbar, da es unzugänglich im Inneren des Filtereinsatzes liegt. Ferner wird hier ein relativ aufwendiger Zentralbolzen für die Anordnung von Differenzdruckventil und Bypaßventil erforderlich. Weiterhin ist bei dem Differenzdruckventil mit seinem tellerförmigen Schließglied ungünstig, daß sein Ansprechverhalten keine hohen Anforderungen erfüllt und somit Standzeitüberwachungen im Zusammenhang mit elektronisch vorausberechneten Serviceintervallen nur schwer durchführbar sind. Außerdem ist im Deckelteil des Gehäuses eine aufwendige Sensorik untergebracht, die eine einfache und kompakte Bauweise verhindert.

### Vorteile der Erfindung

Das erfindungsgemäße Flüssigkeitsfilter mit den kennzeichnenden Merkmalen des Hauptanspruchs hat demgegenüber den Vorteil, daß es eine raumsparende, einfache und kostengünstige Bauweise ermöglicht. Dabei läßt sich eine konzentrische Anordnung der beiden Filterelemente beibehalten, wobei die zwischen ihnen ausgebildete ringförmige Kammer als Zulaufkammer benutzt wird. Durch die Anordnung des Differenzdruckventils im Deckelteil des Gehäuses ergibt sich eine einfache und kompakte Bauweise, wobei das leicht zugängliche Ventil einen einfachen Signalabgriff ermöglicht. Ferner läßt sich durch diese Bauweise der Austausch eines verschmutzten Filtereinsatzes wesentlich erleichtern, indem er sich ohne große Schwierigkeiten am Deckelteil aufstecken läßt. Trotz des Einbaus des Differenzdruckventils im Deckelteil baut dieser kompakt und kostengünstig und ermöglicht einen leichten Austausch des Differenzdruckventils; zudem eignet sich dieser Deckelteil auch für eine Modulbauweise bei unterschiedlichen Einsatzfällen des Filters.

Durch die in den Unteransprüchen aufgeführten Maßnahmen sind vorteilhafte Weiterbildungen und Verbesserungen des im Anspruch 1 angegebenen Flüssigkeitsfilters möglich. Besonders günstig ist es, wenn die zweite und die dritte Dichtstelle an rohrförmigen Stutzen mit unterschiedlich großen Durchmessern ausgebildet werden und diese Dichtstellen mit aufschiebbaren Dichtelementen ausgebildet werden, so daß ein besonders leichter Austausch der Filterelemente möglich ist. Vorteilhaft ist ferner eine Ausbildung des Differenzdruckventils in Patronenbauweise und seine Anordnung im Deckelteil parallel zur Längsachse des Filters, wodurch sich eine einfache und kompakte Bauweise ergibt, die auch einen leichten Signalabgriff zuläßt. Ferner führt dies zu einer kostengünstigen Bauweise, bei der bei einem Austausch des Filtereinsatzes keine Rücksicht auf das Differenzdruckventil und dessen Sensorik genommen werden muß. Ferner ist es besonders zweckmäßig, wenn das Differenzdruckventil mit einem Schieber arbeitet, an dem ein Kolbenbund zur Steuerung des Ablaufkanals vorgesehen ist. Die am Schieber druckbeaufschlagte Fläche läßt sich hierbei von der eigentlichen Steuerfunktion trennen, wodurch ein relativ genau arbeitendes Differenzdruckventil erreichbar ist, das eine bessere Ausnutzung der Standzeitreserve ermöglicht. Ferner läßt sich bei dieser Patronenbauweise das Differenzdruckventil ohne großen Mehraufwand so ausbilden, daß nach dem Überschreiten des Schaltdruckes das Schließglied des Differenzdruckventils in seine Endstellung schnappt. Weitere vorteilhafte Ausgestaltungen ergeben sich aus den übrigen Ansprüchen, der Beschreibung und der Zeichnung.

### Zeichnung

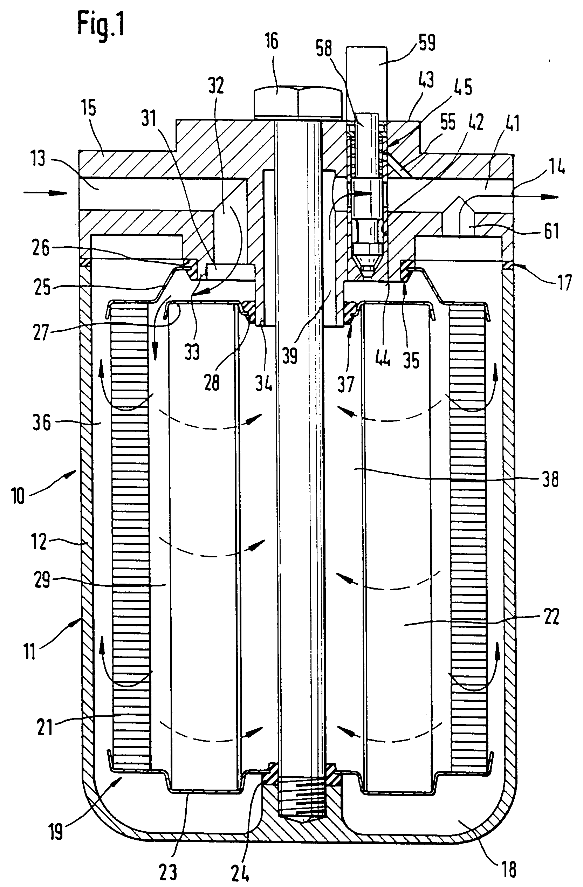

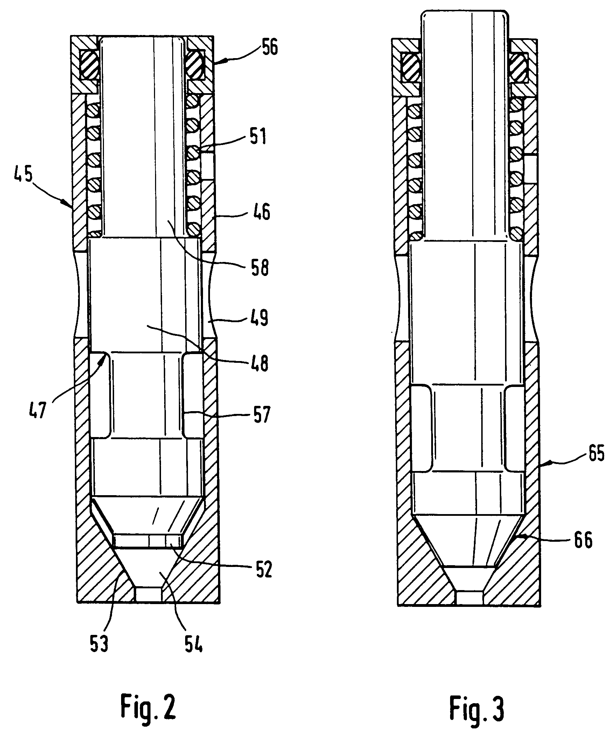

Ein Ausführungsbeispiel der Erfindung ist in der Zeichnung dargestellt und in der nachfolgenden Beschreibung näher erläutert. Es zeigen Figur 1 einen Längsschnitt durch ein erstes Ausführungsbeispiel des Flüssigkeitsfilters in vereinfachter Darstellung, Figur 2 einen Längsschnitt durch das Differenzdruckventil in Patronenbauweise nach Figur 1 in vergrößertem Maßstab und Figur 3 einen Längsschnitt durch ein zweites Ausführungsbeispiel des Differenzdruckventils.

### Beschreibung der Ausführungsbeispiele

Die Figur 1 zeigt einen Längsschnitt durch ein Flüssigkeitsfilter 10 zum Reinigen von Kraftstoff, das in stark vereinfachter Weise dargestellt ist. Das Flüssigkeitsfilter 10 ist nach Art eines Gehäusefilters mit austauschbarem Filtereinsatz ausgebildet, dessen Gehäuse 11 aus einem becherförmigen Gehäuseteil 12 und einem die Anschlüsse für Zulauf 13 und Ablauf 14 aufweisenden Deckelteil 15 besteht, die durch eine zentral angeordnete Schraube 16 lösbar miteinander verbunden sind. Gehäuseteil 12 und Deckelteil 15 bilden miteinander eine erste, äußere Dichtstelle 17, welche den Innenraum 18 des Gehäuses 11 nach außen hin abdichtet.

Im Innenraum 18 des Gehäuses 11 ist austauschbar ein Filtereinsatz 19 angeordnet, der aus zwei radial durchströmten Filterelementen besteht, von denen das äußere als Hauptfilterelement 21 und das innere als Hilfsfilterelement 22 dient. Die beiden Filterelemente 21, 22 haben eine gemeinsame, bodenseitige Abdeckkappe 23, die über einen Dichtring 24 an der Schraube 16 zentriert ist und am Gehäuseteil 12 dichtend anliegt. Am entgegengesetzt zur Abdeckkappe 23 liegenden Ende des Filtereinsatzes 19 ist am Hauptfilterelement 29 ein äußerer Abdeckring 25 angeordnet, der an seinem inneren Durchmesser eine Dichtmanschette 25 aufweist. In entsprechender Weise ist am Hilfsfilterelement 22 ein innerer Abdeckring 27 angeordnet, der an seinem inneren Durchmesser eine Dichtmanschette 28 trägt. Auf diese Weise ist zwischen den beiden Filterelementen 21, 22 ein ringförmiger Raum ausgebildet, der als Zulaufkammer 29 dient und der zwischen den beiden Abdeckringen 25, 27 hindurch mit einer Zulauföffnung 31 im Deckelteil 15 verbunden ist, die über einen abgewinkelt verlaufenden Zulaufkanal 32 mit dem Zulauf 13 Verbindung hat.

Der Filtereinsatz 19 ist mit seinen zwei Dichtmanschetten 26, 28 in Richtung der Längsachse des Flüssigkeitsfilters 10 auf das Deckelteil 15 aufgesteckt, wozu dieses einen rohrförmigen Stutzen 33 sowie einen zentralen Rohrstutzen 34 aufweist. Der rohrförmige Stutzen 33 bildet mit der Dichtmanschette 26 eine zweite, ringförmige Dichtstelle 35, welche die Zulaufkammer 29 von einem außerhalb des Hauptfilterelements 21 liegenden Reinraum 36 trennt. Die am Rohrstutzen 34 anliegende Dichtmanschette 28 bildet eine dritte, ringförmige Dichtstelle 37, welche die Zulaufkammer 29 von einem innenliegenden Reinraum 38 trennt. Die zweite Dichtstelle 35 ist im Durchmesser beträchtlich größer als die dritte Dichtstelle 37; zugleich ist ihr Durchmesser erheblich kleiner als der Außendurchmesser des Hauptfilterelements 21, so daß die Abdichtung mit geringerem Aufwand leichter beherrschbar ist. Alle drei Dichtstellen 17, 35, 37 liegen in Bezug auf die Längsachse des Filters gesehen im wesentlichen in einer gleichen radialen Ebene, was eine kompakte Bauweise des Flüssigkeitsfilters 10 begünstigt. Der hohl ausgebildete, zentrale Rohrstutzen 34, welcher von der Schraube 16 durchdrungen wird, stellt zugleich einen Teil eines abgewinkelt verlaufenden Ablaufkanals 39 dar, der mit dem Ablauf 14 in Verbindung steht.

Der im Deckelteil 15 rechtwinklig verlaufende Ablaufkanal 39 weist eine zum Ablauf 14 führende, radial verlaufende Radialbohrung 41 auf, die von einer Längsbohrung 42 durchdrungen wird. Diese Längsbohrung 42 verläuft parallel zur Längsachse des Flüssigkeitsfilters 10 und durchgehend von einer äußeren Stirnseite 43 des Deckelteils 15 zu dessen inneren Stirnseite 44, wobei die Längsbohrung 42 dort in einen ringförmigen Bereich mündet, der zwischen der zweiten und dritten Dichtstelle 35 bzw. 37 liegt. In diese Längsbohrung 42 ist ein Differenzdruckventil 45 eingesetzt, das als Patronenventil ausgebildet ist.

Das im Deckelteil 15 eingebaute Differenzdruckventil nach Figur 1 ist in Figur 2 in vergrößertem Maßstab dargestellt. Für die Ausbildung als Patronenventil weist es als Schließglied einen in einer Ventilhülse 46 dicht und gleitend geführten Schieber 47 auf, der mit einem Kolbenbund 48 in der Ventilhülse 46 liegende Durchgangsöffnungen 49 steuert. Diese Durchgangsöffnungen 49 liegen dabei in der Radialbohrung 41 des Ablaufkanals und werden in der gezeichneten Stellung des Schiebers 47 von dem Kolbenbund 48 zugesteuert. In der in Figur 2 dargestellten Stellung wird der Schieber 47 von einer Feder 51 mit einem am entgegengesetzten Ende ausgebildeten Ventilkegel 52 auf einen Ventilsitz 53 in einer Steuerkammer 54 gedrückt. Der die Feder 51 aufnehmende Ringraum steht über eine Querbohrung 55 mit dem Ablauf 14 in Verbindung und ist nach außen hin durch eine Dichtmanschette 56 abgesperrt. Am entgegengesetzten Ende der Ventilhülse 46 steht die dort ausgebildete Steuerkammer 54 mit der Zulaufkammer 29 bzw. der Zulauföffnung 31 in Verbindung. Die wirksame Druckfläche des Ventilsitzes 52 ist dabei kleiner ausgebildet als die Querschnittsfläche des Schiebers 47, so daß der Schieber 47 bei Erreichen des Schaltdruckes und Ansprechen des Differenzdruckventils 45 schnappartig in seine andere Endstellung bewegt wird, wobei über eine Ringnut 57 am Schieber 47 der Ablaufkanal 39 aufgesteuert wird. Mit einem an der äußeren Stirnseite 43 liegenden Stößelende 58 des Schiebers 47 wird ein am Deckelteil 15 angeordneter Signalgeber 59 betätigt, der zum Beispiel als Induktiv- oder Hallgeber ausgebildet werden kann.

Wie ferner Figur 1 näher zeigt, ist in dem Deckelteil 15 im Bereich zwischen erster Dichtstelle 17 und zweiter Dichtstelle 35 ein Druchgang 61 ausgebildet, über welchen der äußere Reinraum 36 mit dem Ablauf 14 verbunden ist, so daß der Durchgang 61 stromabwärts vom Differenzdruckventil 45 in den Ablaufkanal 39 mündet. Im Deckelteil 15 sind der Zulaufkanal 32 und der Ablaufkanal 39 mit dem dazwischengeschalteten Differenzdruckventil 45 im wesentlichen diametral zu der Schraube 16 angeordnet. Ferner liegen Zulauf 13 und Ablauf 14 im wesentlichen koaxial zueinander, so daß das im wesentlichen scheibenförmig aufgebaute Deckelteil 15 verhältnismäßig flach baut.

Die Wirkungsweise des Flüssigkeitsfilters 10 wird wie folgt erläutert, wobei die grundsätzliche Funktion solcher Filter, die auch als Watchdog-Filter bezeichnet werden, als an sich bekannt vorausgesetzt wird.

Der zu reinigende Kraftstoff strömt vom Zulauf 13 über den Zulaufkanal 32 in die zwischen den beiden Filterelementen 21, 22 ausgebildete Zulaufkammer 29, durchströmt dann anschließend das außenliegende Hauptfilterelement 21 radial von innen nach außen, gelangt in den äußeren Reinraum 36 und weiter über den Durchgang 61 im Deckelteil 15 zum Ablauf 14. Der gereinigte Kraftstoff strömt somit unter Umgehung des Hilfsfilterelements 22 und des Differenzdruckventils 45 zum Ablauf 14, so lange die Feder 51 im Differenzdruckventil 45 dessen Kolbenschieber 47 in der gezeichneten Stellung hält, wobei dessen Kolbenbund 48 die Verbindung durch die Radialbohrung 41 sperrt.

Übersteigt nun infolge Verschmutzung des Hauptfilterelements 21 die an ihm auftretende Druckdifferenz einen vorgegebenen Wert, so schaltet das Differenzdruckventil 45 um, wobei über die Ringnut 57 der Ablaufkanal 39 aufgesteuert wird. Beim Umschalten des Ventils 45 wirkt der in der Zulaufkammer 29 herrschende Druck auch in der Steuerkammer 54 und beaufschlagt dort die kleinere wirksame Fläche des Ventilsitzes 52. Nach dem Abheben des Ventilsitzes 52 vom Ventilkegel 53 kann sich der Druck auch auf den vollen Querschnitt des Schiebers 47 auswirken, so daß dieser schnappartig umschaltet. Der zu filternde Krafstoff fließt nun vom Zulauf 13 in die Zulaufkammer 29, durchströmt radial von außen nach innen das Hilfsfilterelement 22 und gelangt über den aufgesteuerten Abflußkanal 39 zum Ablauf 14. Beim Umschalten des Differenzdruckventils 45 wird im Signalgeber 59 ein Signal erzeugt, das in einer zugehörigen Elektronik in einem Fahrzeug weiterverarbeitet wird. Wegen der nicht erfaßbaren und wechselnden Verschmutzungsgrade der Kraftstoffe ist es in der Praxis schwierig, das Wechselintervall für den Filtereinsatz von vorneherein optimal festzulegen, was häufig dazu führt, daß das Flüssigkeitsfilter 10 entsprechend überdimmensioniert werden muß, um in jedem Fall eine Betriebsstörung zu vermeiden. Mit Hilfe des Signals vom Differenzdruckventil 45 läßt sich nun eine kostengünstige Standzeitüberwachung realisieren, die es erlaubt, mittels elektronischer Überwachung das Serviceintervall vorauszuberechnen und somit flexibel zu gestalten. Das Flüssigkeitsfilter 10 kann dadurch in ein bereits vorhandenes flexibles Servicesystem mit einbezogen werden. Mit dem vorliegenden Flüssigkeitsfilter kann selbst bei plötzlich starkem Schmutzanfall im Kraftstoff das System rechtzeitig reagieren. Dabei läßt sich durch die umschaltbaren Filterelemente 21, 22 erreichen, daß das Fahrzeug noch einige Zeit ohne Störung betrieben werden kann und daß bei einer Registrierung des Druckanstiegs über der Laufzeit der Umschaltpunkt als zusätzlicher Korrekturwert verwendet werden kann.

Bei verschmutztem Filtereinsatz 19 läßt sich nach dem Lösen der zentralen Schraube 16 das becherförmige Gehäuseteil 12 leicht abnehmen, wonach der verschmutzte Filtereinsatz 19 entfernt werden kann, ohne daß hierbei auf das Differenzdruckventil 45 mit seiner angeschlossenen Sensorik Rücksicht genommen werden müsste. Ein neuer Filtereinsatz 19 läßt sich leicht einbauen, indem er mit seinen beiden Dichtmanschetten 26, 28 auf die zugehörigen Rohrstutzen 33 bzw. 34 aufgesteckt wird und anschließend das Gehäuse 11 verschlossen wird.

Die Figur 3 zeigt einen Längsschnitt durch ein zweites Differenzdruckventil 65, das ebenfalls als Patronenventil ausgebildet ist und sich von dem ersten Differenzdruckventil 45 nach Figur 2 lediglich dadurch unterscheidet, daß es einen anderen Ventilsitz 66 aufweist. Dieser Ventilsitz 66 ist so gestaltet, daß sich das Ventil 65 mit steigendem Differenzdruck langsam öffnet, wodurch direkt auf den Verschmutzungsgrad der Filterelemente 21, 22 geschlossen und die Hochrechnung der Lebensdauer permanent aktualisiert werden kann. Außerdem läßt sich damit eine verbesserte Basis für die Berechnung der Gesamtlebensdauer für den Filtereinsatz 19 schaffen.

## Patentansprüche

1. Flüssigkeitsfilter, insbesondere zum Reinigen von Kraftstoffen, mit einem Gehäuse (11), in dem ein Zulauf (13) und ein Ablauf (14) angeordnet sind, zwischen denen im Inneren des Gehäuses ein radial durchströmtes Hauptfilterelement (21), ein dazu konzentrisch angeordnetes Hilfsfilterelement (22) sowie ein Differenzdruckventil (45) geschaltet sind, von denen das Hilfsfilterelement und das Differenzdruckventil zueinander in Serie liegen und beide zusammen parallel zum Hauptfilterelement zwischen Zulauf und Ablauf geschaltet sind, so daß bei ablaufender Standzeit des Hauptfilterelements und druckabhängig öffnendem Differenzdruckventil das Hilfsfilterelement in den Druckmittelstrom geschaltet wird, und bei dem das Gehäuse aus einem die Anschlüsse aufweisenden Deckelteil (15) und einem Gehäuseteil (12) besteht, die an einer ersten äußeren Dichtstelle (17) den Innenraum des Gehäuses nach außen abdichten und bei dem das Deckelteil mit dem Hauptfilterelement eine ringförmige zweite Dichtstelle (35) zwischen Schmutz- und Reinseite bildet, dadurch gekennzeichnet, daß das Deckelteil (15) einen zentralen Rohrstutzen (34) aufweist, der mit dem Hilfsfilterelement (22) eine dritte, innere Dichtstelle (37) bildet, die von der zweiten Dichtstelle (35) umgeben ist und daß zwischen der zweiten (35) und dritten Dichtstelle (37) ein im Deckelteil (11) verlaufender Zulaufkanal (32) in den Innenraum (18) des Gehäuses (15) führt und mit einer zwischen den beiden Filterelementen (21, 22) liegenden Zulaufkammer (29) verbunden ist, daß im Rohrstutzen (34) ein Ablaufkanal (39) verläuft, der einen innenliegenden Reinraum (38) des Hilfsfilterelementes (22) mit dem Ablauf (14) verbindet, daß das Differenzdruckventil (45) im Deckelteil (15) angeordnet und in den Ablaufkanal (39) geschaltet ist und daß von einem außenliegenden Reinraum (36) des Hauptfilterelements (21) ein im Deckelteil (15) angeordneter Durchgang (61) stromabwärts vom Differenzdruckventil (45) zum Ablauf (14) geführt ist.

2. Flüssigkeitsfilter nach Anspruch 1, dadurch gekennzeichnet, daß die zweite Dichtstelle (35) an einem rohrförmigen Stutzen (33) des Deckelteils (15) ausgebildet ist und einen größeren Durchmesser als die dritte Dichtstelle (37) aufweist und daß diese beiden Dichtstellen (35, 37) mit axial auf die Stutzen (33, 34) aufschiebbaren Dichtelementen (26, 28) ausgebildet sind.

3. Flüssigkeitsfilter nach Anspruch 1 oder 2, dadurch gekennzeichnet, daß das Differenzdruckventil (45) vom Druck in der Zulaufkammer (29) gegen die Kraft einer Feder (51) beaufschlagbar ist.

4. Flüssigkeitsfilter nach einem der Ansprüche 1 bis 3, dadurch gekennzeichnet, daß in Bezug zur Längsachse des Filters (10) der Zulaufkanal (32) und das Differenzdruckventil (45) auf entgegengesetzten Seiten angeordnet sind.

5. Flüssigkeitsfilter nach einem oder mehreren der Ansprüche 1 bis 4, dadurch gekennzeichnet, daß das Differenzdruckventil (45, 65) in Patronenbauweise ausgebildet ist und insbesondere parallel zur Längsachse des Filters (10) angeordnet ist.

6. Flüssigkeitsfilter nach Anspruch 5, dadurch gekennzeichnet, daß das Deckelteil (15) eine seine beiden Stirnseiten (43, 44) verbindende durchgehende Längsbohrung (42) aufweist, in die das Differenzdruckventil (45, 65) mit seiner Ventilhülse (46) eingebaut ist, wobei die Längsbohrung (42) im ringförmigen Bereich zwischen der zweiten (35) und dritten Dichtstelle (37) in die innenliegende Stirnfläche (44) führt.

7. Flüssigkeitsfilter nach Anspruch 6, dadurch gekennzeichnet, daß das Differenzdruckventil (45) einen Schieber (47) aufweist, der mit einem Kolbenbund (48) Durchgangsöffnungen (49) in der Ventilhülse (46) steuert, welche mit dem Ablaufkanal (39) verbunden sind.

8. Flüssigkeitsfilter nach einem der Ansprüche 3 bis 7, dadurch gekennzeichnet, daß das Schließglied (47) des Differenzdruckventils (45) zur Erzielung eines Schnappeffekts eine erste, kleinere Druckfläche aufweist, die durch eine Sitzventilfunktion (52, 53) von einer zweiten, größeren Druckfläche getrennt ist.

9. Flüssigkeitsfilter nach einem oder mehreren der Ansprüche 1 bis 8, dadurch gekennzeichnet, daß der äußeren Stirnseite (43) des Deckelteils (15) ein Signalgeber (59) zugeordnet ist, der mit dem Schließglied (47) des Differenzdruckventils (45) gekoppelt ist.

10. Flüssigkeitsfilter nach einem oder mehreren der Ansprüche 1 bis 9, dadurch gekennzeichnet, daß die zweite, mittlere Dichtstelle (35) einen Durchmesser hat, der kleiner ist als der Außendurchmesser des Hauptfilterelements (21) und daß alle drei Dichtstellen (17, 35, 37) im wesentlichen in der gleichen, senkrecht zur Längsachse des Filters (10) verlaufenden Ebene liegen.

11. Flüssigkeitsfilter nach einem oder mehreren der Ansprüche 1 bis 10, dadurch gekennzeichnet, daß es als Gehäusefilter (10) ausgebildet ist, bei dem das becherförmige Gehäuseteil (12) lösbar mit dem Deckelteil (15) verbunden ist.

12. Flüssigkeitsfilter nach Anspruch 11, dadurch gekennzeichnet, daß Gehäuseteil (12) und Deckelteil (15) durch eine zentrale Schraube (16) miteinander verbunden sind, die den zentralen Rohrstutzen (34) im Ablaufkanal (39) durchdringt.

## Claims

1. Liquid filter, especially for the purification of fuels, with a housing (11), in which are arranged an inflow (13) and an outflow (14), between which are inserted, inside the housing, a main filter element (21) having a radial throughflow, an auxiliary filter element (22) arranged concentrically thereto and a differential-pressure valve (45), of which the auxiliary filter element and the differential-pressure valve are in series with one another and both together are connected in parallel with the main filter element between the inflow and outflow, so that, with the service life of the main filter element expiring and with the differential-pressure valve opening as a function of pressure, the auxiliary filter element is inserted into the pressure-medium stream, and in which the housing consists of a cover part (15) having the connections and of a housing part (12) which seal off the interior of the housing relative to the outside at a first outer sealing point (17), and in which the cover part forms with the main filter element an annular second sealing point (35) between the dirty side and the clean side, characterized in that the cover part (15) has a central tubular connection piece (34) which forms with the auxiliary filter element (22) a third inner sealing point (37) which is surrounded by the second sealing point (35), and in that, between the second (35) and the third (37) sealing point, an inflow duct (32) extending in the cover part (15) leads into the interior (18) of the housing (11) and is connected to an inflow chamber (29) located between the two filter elements (21, 22), in that an outflow duct (39) extends in the tubular connection piece (34) and connects an inner clean space (38) of the auxiliary filter element (22) to the outflow (14), in that the differential-pressure valve (45) is arranged in the cover part (15) and is inserted into the outflow duct (39), and in that a passage (61) arranged in the cover part (15) is guided, downstream of the differential-pressure valve (45), from an outer clean space (36) of the main filter element (21) to the outflow (14).

2. Liquid filter according to Claim 1, characterized in that the second sealing point (35) is formed on a tube-shaped connection piece (33) of the cover part (15) and has a larger diameter than the third sealing point (37), and in that these two sealing points (35, 37) are designed with sealing elements (26, 28) capable of being pushed axially onto the connection pieces (33, 34).

3. Liquid filter according to Claim 1 or 2, characterized in that the differential-pressure valve (45) can be loaded by the pressure in the inflow chamber (29) counter to the force of a spring (51).

4. Liquid filter according to one of Claims 1 to 3, characterized in that the inflow duct (32) and the differential-pressure valve (45) are arranged on opposite sides with respect to the longitudinal axis of the filter (10).

5. Liquid filter according to one or more of Claims 1 to 4, characterized in that the differential-pressure valve (45, 65) is of cartridge-type design and, in particular, is arranged parallel to the longitudinal axis of the filter (10).

6. Liquid filter according to Claim 5, characterized in that the cover part (15) has a continuous longitudinal bore (42) which connects its two end faces (43, 44) and into which the differential-pressure valve (45, 65) together with its valve sleeve (46) is fitted, the longitudinal bore (42) leading into the inner end face (44) in the annular region between the second (35) and third (37) sealing point.

7. Liquid filter according to Claim 6, characterized in that the differential-pressure valve (45) has a slide (47) which, by means of a piston collar (48), controls passage orifices (49) in the valve sleeve (46), the said passage orifices being connected to the outflow duct (39).

8. Liquid filter according to one of Claims 3 to 7, characterized in that, to achieve a snap effect, the closing member (47) of the differential-pressure valve (45) has a first smaller pressure surface which is separated from a second larger pressure surface by a seat-valve function (52, 53).

9. Liquid filter according to one or more of Claims 1 to 8, characterized in that the outer end face (43) of the cover part (15) is assigned a signal transmitter (59) which is coupled to the closing member (47) of the differential-pressure valve (45).

10. Liquid filter according to one or more of Claims 1 to 9, characterized in that the second middle sealing point (35) has a diameter which is smaller than the outside diameter of the main filter element (21), and in that all three sealing points (17, 35, 37) lie essentially in the same plane extending perpendicularly to the longitudinal axis of the filter (10).

11. Liquid filter according to one or more of Claims 1 to 10, characterized in that it is designed as a housing filter (10), in which the bowl-shaped housing part (12) is releasably connected to the cover part (15).

12. Liquid filter according to Claim 11, characterized in that the housing part (12) and cover part (15) are connected to one another by means of a central screw (16) which passes through the central tubular connection piece (34) in the outflow duct (39).

## Revendications

1. Filtre à liquide, en particulier pour la purification de carburants, comprenant un boîtier (11) dans lequel sont disposées une entrée (13) et une sortie (14) entre lesquelles sont branchés à l'intérieur du boîtier, un élément de filtre principal (21) traversé radialement par le courant et un élément de filtre auxiliaire (22) concentrique à l'élément de filtre principal ainsi qu'une soupape à pression différentielle (45), l'élément de filtre auxiliaire et la soupape à pression différentielle étant branchés en série et tous les deux en parallèle avec l'élément de filtre principal entre l'entrée et la sortie, caractérisé en ce que l'élément de filtre auxiliaire est branché dans le courant de liquide sous pression de l'élément de filtre principal et que la soupape à pression différentielle s'ouvre au fur et à mesure en fonction du temps d'utilisation, le boîtier se compose d'une partie de couvercle (15) comportant les branchements et d'une partie de boîtier (12) qui a un premier joint (17) extérieur isolant la chambre intérieure du boîtier de l'extérieur ; la partie de couvercle constitue avec l'élément de filtre principal un second joint annulaire (35) entre le côté souillé et le côté propre, caractérisé en ce que la partie de couvercle (15) présente un embout tubulaire central (34) qui constitue avec l'élément de filtre auxiliaire (22) un troisième joint extérieur (37 qui est entouré par le second joint (35) et entre le second joint (35) et le troisième joint (37) un canal d'entrée (32) de la partie de- couvercle (11) conduit à la chambre intérieure (18) du boîtier (15) et est relié à la chambre d'entrée (29) située entre les deux éléments de filtre (21, 22)
- un canal de sortie (39) passe dans l'embout tubulaire (34) et relie la chambre propre (38) de l'élément de filtre auxiliaire (22) avec la sortie (14),
- la soupape à pression différentielle (45) se trouve dans la partie de couvercle (15) et est branchée dans le canal de sortie (39),
- un passage (61) est réalisé à partir de la chambre propre extérieure (36) de l'élément de filtre principal (21) dans la partie de couvercle (15) en aval de la soupape à pression différentielle (45) vers la sortie (14).

2. Filtre à liquide, en particulier pour la purification de carburants, caractérisé en ce que le second joint d'étanchéité (35) est réalisé sur un embout tubulaire (33) de la partie de couvercle (15) et présente un diamètre supérieur à celui du troisième joint d'étanchéité (37) et les deux joints d'étanchéité (35, 37) sont réalisés avec des éléments d'étanchéité (26, 28) emmanchés axialement sur les embouts (33, 34).

3. Filtre à liquide, en particulier pour la purification de carburants selon l'une des revendications 1 ou 2, caractérisé en ce que la soupape à pression différentielle (45) est sollicitée contre la force d'un ressort (51) par la pression dans la chambre d'entrée (29).

4. Filtre à liquide, en particulier pour la purification de carburants selon l'une des revendications 1 à 3, caractérisé en ce que le canal d'entrée (32) et la soupape à pression différentielle (45) sont disposés en regard l'un de l'autre par rapport à l'axe longitudinal du filtre (10).

5. Filtre à liquide, en particulier pour la purification de carburants selon l'une des revendications 1 à 4, caractérisé en ce que la soupape à pression différentielle (45, 65) réalisée en forme de cartouche est notamment disposée parallèle à l'axe longitudinal du filtre (10).

6. Filtre à liquide, en particulier pour la purification de carburants selon la revendication 5, caractérisé en ce que la partie de couvercle (15) présente un perçage longitudinal (42) reliant ses deux faces frontales (43, 44) dans lequel est monté la soupape à pression différentielle (45, 65) ainsi que sa douille de soupape (46), le perçage longitudinal (42) conduit à l'espace annulaire entre le second joint d'étanchéité (35) et le troisième joint d'étanchéité (37) dans la face frontale intérieure (44).

7. Filtre à liquide, en particulier pour la purification de carburants selon la revendication 6, caractérisé en ce que la soupape à pression différentielle (45) présente un coulisseau (47) qui commande les ouvertures traversantes (49) dans la douille de soupape (46) avec une bague de piston (46), ces ouvertures sont reliées avec le canal de sortie.

8. Filtre à liquide, en particulier pour la purification de carburants selon la revendication 3 à 7, caractérisé en ce que l'organe de fermeture (47) de la soupape à pression différentielle (45) présente pour obtenir un effet de basculement très rapide, une première surface de pression petite séparée par une fonction de siège de soupape (52, 53) d'une seconde surface de pression plus grande.

9. Filtre à liquide, en particulier pour la purification de carburants selon l'une des revendications 1 à 8, caractérisé en ce qu'un capteur (59) se trouve dans la face frontale extérieure (43) de la partie de couvercle (15), ce capteur est couplé avec l'organe de fermeture (47) de la soupape à pression différentielle (45).

10. Filtre à liquide, en particulier pour la purification de carburants selon une ou plusieurs des revendications 1 à 9, caractérisé en ce que le second joint (35) du milieu a un diamètre plus petit que le diamètre extérieur de l'élément de filtre (21) et tous les trois joints (17, 35, 37) se trouvent essentiellement dans le même plan perpendiculaire à l'axe longitudinal du filtre (10).

11. Filtre à liquide, en particulier pour la purification de carburants selon une ou plusieurs des revendications 1 à 10, caractérisé en ce qu'il est réalisé comme boîtier de filtre (10) dans lequel la partie de boîtier (12) en forme de gobelet est reliée à la partie de couvercle (15) de manière amovible.

12. Filtre à liquide, en particulier pour la purification de carburants selon la revendication 11, caractérisé en ce que la partie de boîtier (12) et la partie de couvercle (15) sont reliées entre elles par une vis centrale (16) qui traverse les embouts centraux cylindriques (34) dans le canal de sortie (39).
